# NEUE EUROPÄISCHE PATENTSCHRIFT

(11) **EP 3 433 907 B2**
(45) Veröffentlichungstag und Bekanntmachung des Hinweises auf die Entscheidung über den Einspruch: **06.08.2025**
(45) Hinweis auf die Patenterteilung: 01.04.2020
(21) Anmeldenummer: 17705902.9
(22) Anmeldetag: 20.02.2017
(51) Int. Cl.: B60L 53/16, H01R 13/502

(54) **STECKVERBINDERTEIL ZUM STECKENDEN VERBINDEN MIT EINEM GEGENSTECKVERBINDERTEIL**
A CONNECTOR FOR CONNECTING TO A MATING CONNECTOR
CONNECTEUR COMPRENANT UN ÉLÉMENT DE CONNECTEUR COMPLÉMENTAIRE

(30) Priorität: 22.03.2016 DE 102016105371
(43) Veröffentlichungstag der Anmeldung: 30.01.2019
(73) Patentinhaber: Phoenix Contact e-Mobility GmbH, 32816 Schieder-Schwalenberg (DE)
(72) Erfinder: FÜHRER, Thomas, 32825 Blomberg (DE)
(74) Vertreter: Maikowski & Ninnemann Patentanwälte Partnerschaft mbB
(86) Internationale Anmeldenummer: PCT/EP2017/053769
(87) Internationale Veröffentlichungsnummer: WO 2017/162381

(56) Entgegenhaltungen:
- EP-A1- 2 509 170
- EP-A1- 2 509 170
- EP-A1- 2 728 678
- EP-A1- 2 728 678
- WO-A1-2014/157317
- WO-A1-2014/157317
- DE-A1- 102010 017 458
- DE-A1- 102012 015 737
- DE-A1- 102013 102 823
- DE-C2- 19 650 099
- GB-A- 2 503 349
- GB-A- 2 503 349
- US-A- 5 401 174

## Beschreibung

Die Erfindung betrifft ein Ladesystem aufweisend ein Ladekabel zum Herstellen einer elektrischen Verbindung zum Übertragen von Ladeströmen zwischen einer Ladestation und einem Elektrofahrzeug und einen mit dem Ladekabel verbundenen Ladestecker zum steckenden Verbinden mit einem Gegensteckverbinderteil zum Aufladen eines Elektrofahrzeugs nach dem Oberbegriff des Anspruchs 1.

Ein derartiger Ladestecker umfasst ein Gehäuseteil, das aus einem ersten Material gefertigt ist, und mindestens ein an dem Gehäuseteil angeordnetes Steckelement zum elektrischen Kontaktieren mit dem Gegensteckverbinderteil.

Bei einem beispielsweise aus der DE 10 2013 102 823 A1 bekannten Steckverbinderteil in Form eines Ladesteckers sind an einem Gehäuseteil zwei Steckabschnitte ausgebildet, die jeweils eine Öffnung aufweisen, innerhalb deren mehrere Steckelemente angeordnet sind. Die zapfenförmigen Steckelemente weisen jeweils an der Stecköffnung ein elektrisches Kontaktelement zum elektrischen Kontaktieren mit einem zugeordneten Gegensteckverbinderteil in Form einer Ladebuchse auf. Zum steckenden Verbinden des Steckverbinderteils mit dem Gegensteckverbinderteil wird das Steckverbinderteil mit den Steckabschnitten an dem Gehäuseteil in zugeordnete Einstecköffnungen aufseiten des Gegensteckverbinderteils eingesteckt, sodass die elektrischen Kontaktelemente an den Steckelementen in elektrisch kontaktierender Weise mit zugeordneten Gegenkontaktelementen in Eingriff gelangen und somit Ladeströme zwischen dem Ladestecker und der Ladebuchse übertragen werden können.

Ein solcher Ladestecker kann beispielsweise an einem Ladekabel angeordnet sein, das zum elektrischen Verbinden einer Ladestation mit einem Elektrofahrzeug, also einem elektrisch angetriebenen Fahrzeug, dient. Für einen Ladevorgang wird der Ladestecker beispielsweise in eine Ladebuchse aufseiten des Elektrofahrzeugs eingesteckt, sodass Ladeströme von der Ladestation hin zum Elektrofahrzeug übertragen werden können.

Ein Steckverbinderteil dieser Art, beispielsweise ausgebildet als Ladestecker, unterliegt in normalem Gebrauch einem Verschleiß und ist hohen mechanischen Beanspruchungen ausgesetzt. Wird ein Steckverbinderteil beispielsweise fallengelassen, so wirken Aufprallkräfte insbesondere auf die äußeren Konturen des Steckverbinderteils, beispielsweise auf an dem Gehäuse ausgebildete Steckabschnitte, innerhalb derer die Steckelemente zum elektrischen Kontaktieren angeordnet sind. Weil das Gehäuse eines Steckverbinderteils in der Regel aus Kunststoff hergestellt ist, kann es bei einem Fallenlassen des Steckverbinderteils somit zu Beschädigungen kommen.

Zudem können die Umgebungsbedingungen, insbesondere bei einem Einsatz des Steckverbinderteils im Außenbereich, auch zu Materialveränderungen an dem Gehäuse des Steckverbinderteils führen, wenn das Gehäuse z.B. aus Kunststoff gefertigt ist, was die Festigkeit von Gehäuseabschnitten beeinträchtigen kann.

Es besteht somit ein Bedürfnis nach einem Steckverbinderteil, das gegen Verschleiß und Fehlhandhabung geschützt ist.

Bei einem aus der DE 196 50 099 C2 bekannten Steckverbinderteil ist an einem Steckabschnitt eines Gehäuseteils an einem vorderen Rand ein Dichtungshalter angeordnet, der einen aus Metall gefertigten, kreisförmigen Vorsprung zum Schutz eines anschlussseitigen Endes des Steckabschnitts des Steckergehäuses aufweist.

Weiter sind aus der EP 2 509 170 A1, der GB 2 503 349 A und der EP 2 728 678 A1 innerhalb eines Elektrofahrzeugs eingebaute Ladebuchsen bekannt. Die WO 2014/157317 offenbart einen Ladestecker zum Aufladen eines Elektrofahrzeugs, welcher ein an das Gehäuseteil angesetztes, mit dem Gehäuseteil lösbar verbundenes Ansetzteil aufweist.

Aufgabe der vorliegenden Erfindung ist es, ein Ladesystem mit einem Ladestecker zur Verfügung zu stellen, der einfach aufgebaut, günstig zu fertigen und zudem gegen Verschleiß und unsachgemäße Handhabung geschützt ist.

Diese Aufgabe wird durch einen Gegenstand mit den Merkmalen des Anspruchs 1 gelöst.

Demnach weist der Ladestecker ein an das Gehäuseteil angesetztes, mit dem Gehäuseteil lösbar verbundenes Ansetzteil auf, das zumindest einen Steckabschnitt mit einer Öffnung, in der das zumindest eine Steckelement angeordnet ist, aufweist und aus einem von dem ersten Material unterschiedlichen, zweiten Material gefertigt ist.

Das Gehäuseteil des Ladesteckers, im Weiteren auch als Steckverbinderteil bezeichnet, kann beispielsweise aus Kunststoff, insbesondere einem thermoplastischen Kunststoff, gefertigt sein. Das Ansetzteil ist demgegenüber vorzugsweise aus Metall, beispielsweise einem Metalldruckgussmaterial, insbesondere als Aluminiumdruckgussteil, gefertigt.

Mit einem solchen Steckverbinderteil kann ein Schutz vor Verschleiß und unsachgemäßer Handhabung, beispielsweise einem Fallenlassen des Steckverbinderteils, auf zweifache Weise bereitgestellt werden.

Zum einen ist das an das Gehäuseteil angesetzte Ansetzteil aus einem von dem Gehäuseteil unterschiedlichen, z.B. festeren Material, beispielsweise einem Metall, gefertigt. Das Ansetzteil weist hierbei einen Steckabschnitt auf, der zum Verbinden des Steckverbinderteils mit einem zugeordneten Gegensteckverbinderteil steckend mit einer Einstecköffnung aufseiten des Gegensteckverbinderteils in Eingriff gebracht wird und eine Öffnung umgibt, innerhalb derer das zumindest eine Steckelement, über das die eigentliche elektrische Kontaktierung erfolgt, angeordnet ist. Das Steckelement ist somit durch den Steckabschnitt nach außen hin geschützt. Insbesondere können bei einem Fallenlassen des Steckverbinderteils Aufprallkräfte an dem Steckabschnitt abgefangen werden, ohne dass das innerhalb der Öffnung des Steckabschnitts angeordnete Steckelement von den Aufprallkräften beeinträchtigt wird.

Dadurch, dass das Ansetzteil mit dem Steckabschnitt aus einem anderen, insbesondere festeren Material als andere Gehäuseteile des Steckverbinderteils ausgebildet ist, kann das Ansetzteil so ausgebildet werden, dass das Ansetzteil bei einem Fallenlassen des Steckverbinderteils Aufprallkräfte wirksam aufnehmen und ableiten kann, ohne dass es zu Beschädigungen an dem Steckverbinderteil kommt.

Zum anderen ist das Ansetzteil lösbar mit dem Gehäuseteil verbunden. Dies ermöglicht, das Ansetzteil in einfacher Weise auszuwechseln, wenn es dennoch zu einer Beschädigung an dem Ansetzteil kommt, beispielsweise infolge eines Fallenlassens des Steckverbinderteils. Bricht beispielsweise der Steckabschnitt, so kann ein Nutzer das Ansetzteil von dem Gehäuseteil lösen und durch ein anderes Ansetzteil ersetzen, sodass das Steckverbinderteil in einfacher Weise z.B. durch einen Nutzer wiederhergestellt werden kann.

Bei dem bereitgestellten Steckverbinderteil wird ein Gehäuseabschnitt, an dem eine Steckkontur zum steckenden Verbinden mit dem Gegensteckverbinderteil ausgebildet ist, zweigeteilt. So sind Steckelemente, die elektrische Kontaktelemente zum elektrischen Kontaktieren aufweisen oder durch solche elektrischen Kontaktelemente gebildet sind, an dem Gehäuseteil angeordnet, das beispielsweise mit einem Gehäusekörper des Steckverbinderteils verbunden sein kann. An das Gehäuseteil wiederum ist ein Ansetzteil lösbar angesetzt. Dieses Ansetzteil bildet einen Steckabschnitt aus, innerhalb dessen ein oder mehrere Steckelemente des Gehäuseteils einliegen und das somit einen mechanischen Schutz für die Steckelemente des Gehäuseteils bereitstellt. Prallt das Steckverbinderteil mit seinem vorderen, die Steckkontur ausbildenden Gehäuseabschnitt beispielsweise auf einen harten Untergrund auf, so werden Aufprallkräfte vorwiegend durch das Ansetzteil aufgefangen und abgeleitet. Dadurch, dass das Ansetzteil aus einem anderen Material, beispielsweise einem Metallmaterial, gefertigt ist als das Gehäuseteil, ist das Ansetzteil in geeigneter Weise zum Auffangen und Ableiten solcher Aufprallkräfte ausgebildet. Kommt es dennoch zu einer Beschädigung an dem Ansetzteil, kann dies in einfacher Weise durch Lösen der Verbindung mit dem Gehäuseteil ausgewechselt und durch ein anderes Ansetzteil ersetzt werden.

Das Ansetzteil weist einen quer zur Einsteckrichtung (entlang derer das Steckverbinderteil mit dem zugeordneten Gegensteckverbinderteil in Eingriff gebracht werden kann) erstreckten Flächenabschnitt auf, der bei an das Gehäuseteil angesetztem Ansetzteil flächig an einem zugeordneten Flächenabschnitt des Gehäuseteils anliegt. Von diesem Flächenabschnitt stehen zwei Steckabschnitte vor, die jeweils innerhalb ihrer Öffnung ein oder mehrere Steckelemente, die an dem Gehäuseteil angeordnet sind, aufnehmen.

An dem Ansetzteil sind zwei Steckabschnitte ausgebildet, innerhalb derer jeweils ein oder mehrere Steckelemente zum elektrischen Kontaktieren mit dem zugeordneten Gegensteckverbinderteil angeordnet sind. Durch das Vorsehen mehrerer Steckabschnitte kann beispielsweise ein so genannter Kombistecker bereitgestellt werden, der wahlweise zum Übertragen von Ladeströmen in Form eines Gleichstroms oder in Form eines Wechselstroms dienen kann.

In betriebsgemäßem Zustand ist das Ansetzteil an das Gehäuseteil angesetzt und mit dem Gehäuseteil verbunden. Um hierbei das Ansetzteil verdrehsicher an dem Gehäuseteil festzulegen, sind an dem Ansetzteil ein oder mehrere Formschlusselemente beispielsweise in Form von Zapfen vorgesehen, die mit zugeordneten Gegenformschlusselementen aufseiten des Gehäuseteils, beispielsweise in Form von Öffnungen, in Eingriff stehen, sodass ein Formschluss zwischen dem Ansetzteil und dem Gehäuseteil besteht und das Ansetzteil in seiner Verdrehposition (Bezug genommen wird auf die Einsteckrichtung, entlang derer das Steckverbinderteil mit dem Gegensteckverbinderteil in Eingriff gebracht werden kann) relativ zu dem Gehäuseteil festgelegt ist.

Beispielsweise können, in einer Ausgestaltung, an dem Ansetzteil ein oder mehrere zapfenförmige Formschlusselemente angeordnet sein, die mit Öffnungen aufseiten des Gehäuseteils formschlüssig in Eingriff stehen.

In anderer Ausgestaltung ist auch möglich, dass an dem Gehäuseteil ein oder mehrere vorstehende, zapfenförmige Formschlusselemente angeordnet sind, die mit zugeordneten Öffnungen aufseiten des Ansetzteils formschlüssig in Eingriff stehen.

Solche Formschlusselemente können beispielsweise in Form von Zylinderzapfen mit einem kreisförmigen Querschnitt oder mit einem von einer Kreisform abweichenden Querschnitt ausgebildet sein.

Das Ansetzteil weist ein Eingriffselement auf, das mit einem Gegenelement aufseiten des Gehäuseteils in Eingriff steht. An diesem Eingriffselement ist eine Öffnung ausgebildet, durch die hindurch ein Befestigungselement beispielsweise in Form einer Schraube greift, sodass über das Eingriffselement das Ansetzteil mit dem Gehäuseteil verbunden ist. Ist das Befestigungselement als Schraube ausgebildet, so greift das Befestigungselement beispielsweise in eine Öffnung aufseiten des Gehäuseteils ein, wobei ein Innengewinde an dieser Öffnung derart ausgebildet sein kann, dass der Eingriff des Befestigungselements in die Öffnung selbstsichernd ist.

Zum Lösen des Ansetzteils von dem Gehäuseteil kann das Befestigungselement gelöst werden, sodass nach Lösen des Befestigungselements das Ansetzteil von dem Gehäuseteil entnommen werden kann.

Das Steckverbinderteil weist vorteilhafterweise einen Gehäusekörper auf, an den das Gehäuseteil angesetzt ist. Der Gehäusekörper kann beispielsweise einen Innenraum einschließen, in dem ein Kontakteinsatz angeordnet ist, über den elektrische Kontaktelemente mit einem von dem Steckverbinderteil erstreckten, elektrischen Kabel verbunden sind. Das Gehäuseteil verschließt den Gehäusekörper an einer hin zum zugeordneten Gegensteckverbinderteil weisenden Vorderseite, wobei das Gehäuseteil beispielsweise mit einem Rand an dem Gehäusekörper anliegen und an diesem Rand gegenüber dem Gehäusekörper abgedichtet sein kann, sodass ein feuchtigkeitsdichter Übergang zwischen dem Gehäuseteil und dem Gehäusekörper bereitgestellt wird. Der Rand umgibt das Gehäuseteil vorzugsweise umfänglich, sodass über die Abdichtung an dem Rand der Gehäusekörper hin zum Gehäuseteil in feuchtigkeitsdichter Weise abgeschlossen ist.

Die Abdichtung des Gehäusekörpers aufseiten der Steckkontur erfolgt somit allein über das Gehäuseteil. Das Ansetzteil muss in diesem Fall weder gegenüber dem Gehäuseteil noch gegenüber dem Gehäusekörper in besonderer Weise abgedichtet werden.

Das Steckverbinderteil ist als Ladestecker zum Aufladen eines Elektrofahrzeugs ausgebildet. Ein solcher Ladestecker ist Bestandteil eines Ladesystems und mit einem Ladekabel verbunden, um eine elektrische Verbindung zum Übertragen von Ladeströmen zwischen einer Ladestation und einem Elektrofahrzeug herzustellen.

Der der Erfindung zugrunde liegende Gedanke soll nachfolgend anhand der in den Figuren dargestellten Ausführungsbeispiele näher erläutert werden. Es zeigen:
- Fig. 1: eine perspektivische Ansicht eines Ausführungsbeispiels eines Steckverbinderteils in Form eines Ladesteckers;
- Fig. 2: eine Teilexplosionsdarstellung des Steckverbinderteils, mit einem an ein Gehäuseteil anzusetzenden Ansetzteil;
- Fig. 3: eine gesonderte, vergrößerte Ansicht des Ansetzteils und des Gehäuseteils;
- Fig. 4A: eine gesonderte Ansicht des Ansetzteils;
- Fig. 4B: eine andere, rückseitige Ansicht des Ansetzteils;
- Fig. 5A: eine gesonderte Ansicht des Gehäuseteils; und
- Fig. 5B: eine andere, rückseitige Ansicht des Gehäuseteils.

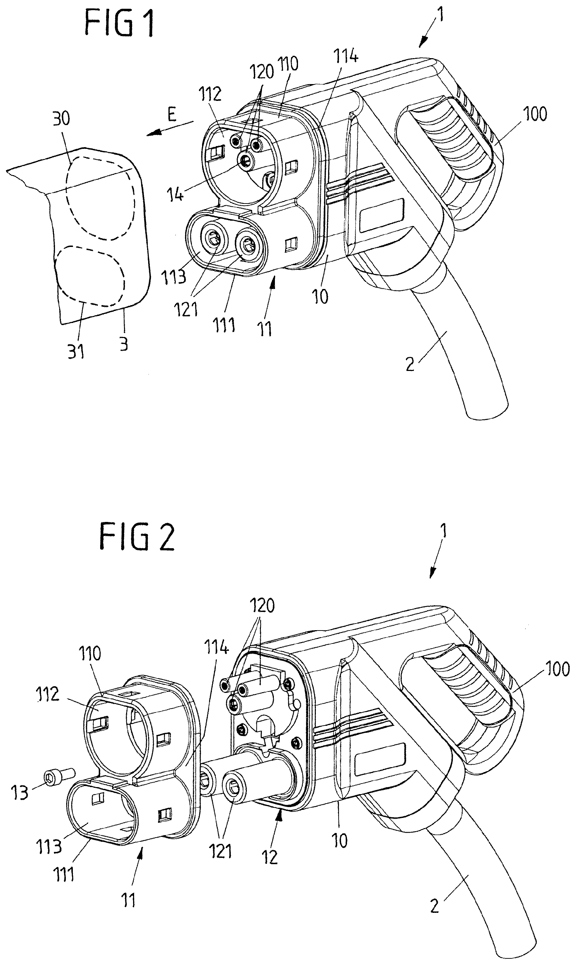

Fig. 1 zeigt eine Ansicht eines Steckverbinderteils 1, das als Ladestecker im Rahmen eines Ladesystems zum Aufladen eines Elektrofahrzeugs ausgebildet und mit einem Kabel 2 verbunden ist. Das Kabel 2 kann beispielsweise an eine Ladestation angeschlossen sein und mehrere Leitungsadern einschließen, über die Ladeströme übertragen werden können.

Das Steckverbinderteil 1 kann in eine Einsteckrichtung E mit einem zugeordneten Gegensteckverbinderteil 3 beispielsweise in Form einer Ladebuchse aufseiten eines Elektrofahrzeugs in Eingriff gebracht werden, sodass, bei verbundenem Steckverbinderteil 1, Ladeströme von der Ladestation hin zum Elektrofahrzeug übertragen werden können und das Elektrofahrzeug somit elektrisch aufgeladen werden kann.

Das Steckverbinderteil 1 weist einen Gehäusekörper 10 auf, von dem sich das Kabel 2 erstreckt und an dem ein Griff 100 zum Angreifen durch einen Nutzer ausgebildet ist. Der Gehäusekörper 10 schließt einen Innenraum ein, in dem beispielsweise ein Kontakteinsatz angeordnet sein kann, über den Leitungsadern des Kabels 2 elektrisch mit Kontaktelementen des Steckverbinderteils 1 verbunden sind.

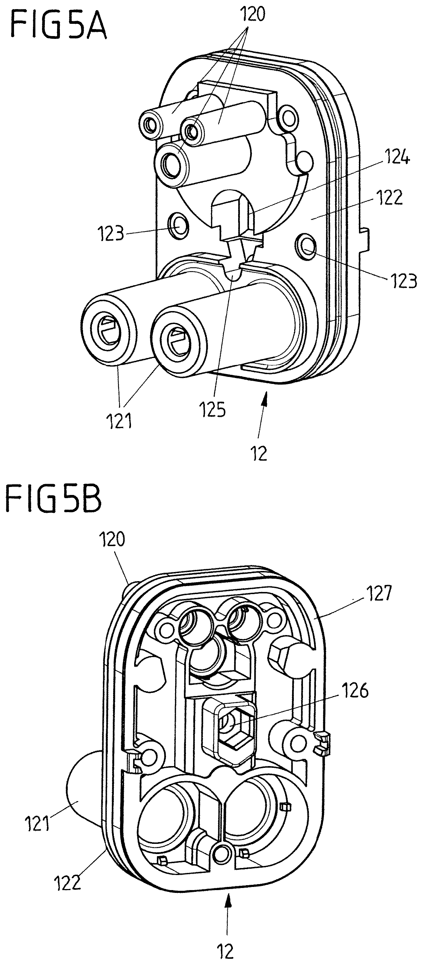

Mit dem Gehäusekörper 10 ist, wie aus der Teilexplosionsansicht gemäß Fig. 2 ersichtlich, ein Gehäuseteil 12 verbunden, das mit einem umfänglichen Rand 127 (siehe Fig. 5B) an den Gehäusekörper 10 angesetzt und gegenüber dem Gehäusekörper 10 abgedichtet ist. Der durch den Gehäusekörper 10 eingefasste Innenraum ist somit durch das Gehäuseteil 12 nach außen hin abgeschlossen und feuchtigkeitsdicht abgedichtet, sodass Feuchtigkeit und Schmutz nicht von außen in das Gehäuseinnere gelangen können.

Hierzu kann an dem Rand 127 beispielsweise eine Dichtung vorgesehen sein, beispielsweise in Form einer angeformten Dichtlippe oder in Form eines an den Rand 127 anzusetzenden Dichtungsrings.

Das Gehäuseteil 12 schließt mit einem Flächenabschnitt 122 den Gehäusekörper 10 ab. Von diesem Flächenabschnitt 122 stehen Steckelemente 120, 121 zapfenförmig nach außen hin vor, wobei zwei Gruppen von Steckelementen 120 bzw. 121 vorhanden sind, die in unterschiedlichen Steckabschnitten 110, 111 eines an das Gehäuseteil 12 anzusetzenden Ansetzteils 11 angeordnet sind. Innerhalb von Öffnungen der Steckelemente 120, 121 sind elektrische Kontakte 14 in Form von Kontaktbuchsen angeordnet, sodass über die Steckelemente 120, 121 das Steckverbinderteil 1 mit einem zugeordneten Gegensteckverbinderteil 3 elektrisch kontaktieren kann.

Das Ansetzteil 11 ist an das Gehäuseteil 12 angesetzt. Das Ansetzteil 11 weist hierbei einen Flächenabschnitt 114 auf, der flächig an den Flächenabschnitt 122 des Gehäuseteils 12 angesetzt ist und, bei verbundenem Ansetzteil 11, flächig an dem Flächenabschnitt 122 des Gehäuseteils 12 anliegt.

Von dem Flächenabschnitt 114 stehen zwei Steckabschnitte 110, 111 in die Einsteckrichtung E vor, die jeweils eine Öffnung 112, 113 einschließen. In jeder Öffnung 112, 113 ist eine Gruppe von Steckelementen 120, 121 des Gehäuseteils 12 angeordnet, sodass bei verbundenem Ansetzteil 11 in einem ersten, oberen Steckabschnitt 110 eine erste Gruppe von Steckelementen 120 und in einem zweiten, unteren Steckabschnitt 111 eine zweite Gruppe von Steckelementen 121 eingefasst ist.

Über die Steckabschnitte 110, 111 und die darin angeordneten Steckelemente 120, 121 kann das Steckverbinderteil 1 in die Einsteckrichtung E mit dem zugeordneten Gegensteckverbinderteil 3 steckend in Eingriff gebracht werden, wobei hierzu die Steckabschnitte 110, 111 in zugeordnete Stecköffnungen 30, 31 an dem Gegensteckverbinderteil 3 eingesteckt werden. Das Steckverbinderteil 1 verwirklicht mit seinen beiden Steckabschnitten 110, 111 einen sogenannten Kombi-Stecker, über den sowohl Gleichströme (Steckelemente 121 des unteren Steckabschnitts 111) als auch Wechselströme (Steckelemente 120 des oberen Steckabschnitts 110) übertragen werden können.

Das Ansetzteil 11 ist als separates Bauteil zu dem Gehäuseteil 12 ausgebildet und lösbar mit dem Gehäuseteil 12 verbunden. Zudem ist das Ansetzteil 11 aus einem anderen Material als das Gehäuseteil 12 gefertigt. Beispielsweise kann das Ansetzteil 11 aus einem Metallmaterial, beispielsweise als Metalldruckgussteil, z.B. als Aluminiumdruckgussteil, hergestellt sein. Das Gehäuseteil 12 kann demgegenüber beispielsweise aus Kunststoff, beispielsweise einem thermoplastischen Kunststoff, gefertigt sein. Das Gehäuseteil 12 ist somit aus einem elektrisch isolierenden Material gefertigt, sodass an den Steckelementen 120, 121 angeordnete Kontaktelemente 14 elektrisch isoliert sind.

Dadurch, dass das Ansetzteil 11 aus einem anderen, insbesondere festeren Material als das Gehäuseteil 12 gefertigt ist, kann das Ansetzteil eine hohe Festigkeit aufweisen. Dies ermöglicht, das Ansetzteil 11 so herzustellen, dass das Ansetzteil 11 einen Schutz gegen Verschleiß und unsachgemäße Handhabung bereitstellt. Wird das Steckverbinderteil 1 beispielsweise fallengelassen und prallt es mit einem Steckabschnitt 110, 111 des Ansetzteils 11 auf einen harten Untergrund auf, so können Aufprallkräfte über das Ansetzteil 11 aufgefangen und abgeleitet werden, ohne dass die innerhalb der Öffnungen 112, 113 der Steckabschnitte 110, 111 angeordneten Steckelemente 120, 121 beschädigt werden. Dadurch, dass das Ansetzteil 11 aus einem besonders festen Material gefertigt ist, kann Beschädigungen an dem Ansetzteil 11 vorgebeugt werden.

Kommt es dennoch zu einer Beschädigung an dem Ansetzteil 11, beispielsweise an einem Steckabschnitt 110, 111 des Ansetzteils 11, so kann das Ansetzteil 11 von dem Gehäuseteil 12 gelöst und durch ein anderes Ansetzteil 11 ersetzt werden, sodass das Steckverbinderteil 1 in einfacher Weise, beispielsweise auch durch einen Nutzer, wiederhergestellt werden kann.

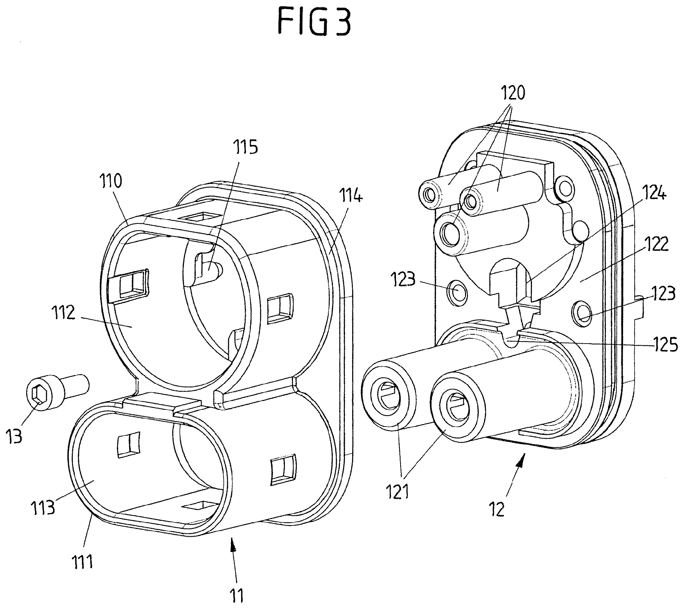

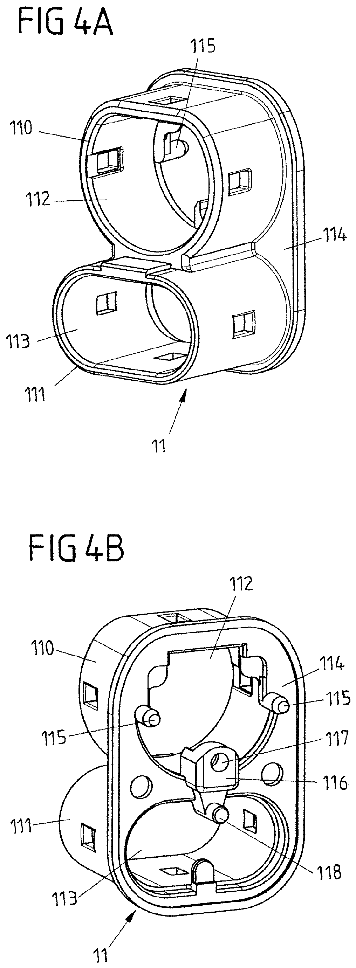

Wie aus den Ansichten gemäß Fig. 3, 4A, 4B und 5A, 5B ersichtlich, weist das Ansetzteil 11 an dem Flächenabschnitt 114 ein Eingriffselement 116 auf, das in einer zugeordneten Eingriffsöffnung 124 am Flächenabschnitt 122 des Gehäuseteils 12 einliegt. In dem Eingriffselement 116 ist eine Öffnung 117 ausgebildet, durch die hindurch ein Befestigungselement 13 in Form einer Schraube greift. Das Befestigungselement 13 greift in eine Gewindeöffnung 126 (siehe Fig. 5B) an dem Gehäuseteil 12 ein, sodass über das Befestigungselement 13 das Ansetzteil 11 mit dem Gehäuseteil 12 verschraubt ist.

Um das Ansetzteil 11 verdrehsicher gegenüber dem Gehäuseteil 12 festzulegen, stehen von dem Flächenabschnitt 114 des Ansetzteils 11 an einer dem Gehäuseteil 12 zugewandten Seite Formschlusselemente 115, 118 in Form von Zapfen vor, die in zugeordnete Öffnungen 123, 125 am Flächenabschnitt 122 des Gehäuseteils 12 eingreifen. Es wird somit ein Formschluss zwischen dem Ansetzteil 11 und dem Gehäuseteil 12 hergestellt, sodass das Ansetzteil 11 in seiner Drehposition (mit Bezug auf die Einsteckrichtung E) relativ zu dem Gehäuseteil 12 gesichert ist.

Soll das Ansetzteil 11 von dem Gehäuseteil 12 gelöst werden, so kann das Befestigungselement 13 in Form der Schraube aus der Öffnung 126 des Gehäuseteils 12 herausgeschraubt werden, sodass das Ansetzteil 11 in die Einsteckrichtung E von dem Gehäuseteil 12 entnommen werden kann. Auf diese Weise kann ein beschädigtes Ansetzteil 11 durch ein anderes Ansetzteil 11 ersetzt werden, um das Steckverbinderteil 1 wiederherzustellen. Dies kann erfolgen, ohne dass das Gehäuseteil 12 von dem Gehäusekörper 10 zu lösen ist.

Weil der Innenraum des Gehäusekörpers 10 nach außen hin durch das Gehäuseteil 12 abgeschlossen ist und der Übergang zwischen dem Gehäuseteil 12 und dem Gehäusekörper 10 feuchtigkeitsdicht abgedichtet ist, muss der Übergang zwischen dem Ansetzteil 11 und dem Gehäuseteil 12 nicht in besonderer Weise abgedichtet sein.

Der der Erfindung zugrunde liegende Gedanke ist nicht auf die vorangehend geschilderten Ausführungsbeispiele beschränkt, sondern lässt sich grundsätzlich auch in gänzlich andersgearteter Weise verwirklichen.

### Bezugszeichenliste

- 1: Steckverbinderteil
- 10: Gehäusekörper
- 11: Ansetzteil
- 110, 111: Steckabschnitt
- 112,113: Öffnung
- 114: Flächenabschnitt
- 115: Formschlusselement (Zapfen)
- 116: Eingriffselement
- 117: Öffnung
- 118: Formschlusselement (Zapfen)
- 12: Gehäuseteil
- 120, 121: Steckelemente (Zapfen)
- 122: Flächenabschnitt
- 123: Gegenformschlusselement (Öffnung)
- 124: Gegenelement (Eingriffsöffnung)
- 125: Gegenformschlusselement (Öffnung)
- 126: Öffnung
- 127: Rand
- 13: Befestigungselement (Schraube)
- 14: Elektrisches Kontaktelement
- 2: Kabel
- 3: Gegensteckverbinderteil
- 30, 31: Stecköffnung
- E: Einsteckrichtung

## Patentansprüche

1. Ladesystem, aufweisend ein Ladekabel (2) zum Herstellen einer elektrischen Verbindung zum Übertragen von Ladeströmen zwischen einer Ladestation und einem Elektrofahrzeug und einen mit dem Ladekabel (2) verbundenen Ladestecker (1) zum steckenden Verbinden mit einem Gegensteckverbinderteil (3) zum Aufladen des Elektrofahrzeugs, wobei der Ladestecker (1) entlang einer Einsteckrichtung (E) mit dem Gegensteckverbinderteil (3) in Eingriff bringbar ist und aufweist:
- ein Gehäuseteil (12), das aus einem ersten Material gefertigt ist,
- mindestens zwei an dem Gehäuseteil (12) angeordnete Steckelemente (120, 121) zum elektrischen Kontaktieren mit dem Gegensteckverbinderteil (3) und
- ein an das Gehäuseteil (12) angesetztes, mit dem Gehäuseteil (12) lösbar verbundenes Ansetzteil (11), das zwei Steckabschnitte (110, 111) mit jeweils einer Öffnung (112, 113), in der jeweils zumindest ein Steckelement (120, 121) angeordnet ist, aufweist,
**dadurch gekennzeichnet, dass** das Ansetzteil (11) aus einem von dem ersten Material unterschiedlichen, zweiten Material gefertigt ist,
wobei das Ansetzteil (11) einen quer zur Einsteckrichtung (E) erstreckten Flächenabschnitt (114) aufweist, der an einem zugeordneten Flächenabschnitt (122) des Gehäuseteils (12) anliegt und von dem die zwei Steckabschnitte (110, 111) vorstehen,
wobei das Ansetzteil (11) zumindest ein Formschlusselement (115, 118) aufweist, das mit einem zugeordneten Gegenformschlusselement (123, 125) des Gehäuseteils (12) derart formschlüssig in Eingriff steht, dass das Ansetzteil (11) um die Einsteckrichtung (E), entlang derer der Ladestecker (1) mit dem Gegensteckverbinderteil (3) verbindbar ist, verdrehsicher zu dem Gehäuseteil (12) festgelegt ist,
wobei das Ansetzteil (11) ein Eingriffselement (116) aufweist, das mit einem Gegenelement (124) des Gehäuseteils (12) in Eingriff steht, wobei das Eingriffselement (116) eine Öffnung (117) aufweist, durch die ein Befestigungselement (13) zum Befestigen des Ansetzteils (11) an dem Gehäuseteil (12) hindurchgreift.

2. Ladesystem nach Anspruch 1, **dadurch gekennzeichnet, dass** das Gehäuseteil (12) aus Kunststoff, insbesondere einem thermoplastischem Kunststoff, gefertigt ist.

3. Ladesystem nach Anspruch 1 oder 2, **dadurch gekennzeichnet, dass** das Ansetzteil (11) aus Metall gefertigt ist.

4. Ladesystem nach Anspruch 3, **dadurch gekennzeichnet, dass** das Ansetzteil (11) aus einem Metalldruckguss, insbesondere Aluminiumdruckguss, gefertigt s

5. Ladesystem nach einem der vorangehenden Ansprüche, **dadurch gekennzeichnet, dass** das zumindest eine Formschlusselement (115, 118) des Ansetzteils (11) durch einen Zapfen gebildet ist, der mit einem zugeordneten Gegenformschlusselement (123, 125) des Gehäuseteils (12) in Form einer Öffnung in Eingriff steht.

6. Ladesystem (1) nach einem der vorangehenden Ansprüche, **dadurch gekennzeichnet, dass** der Ladestecker (1) einen Gehäusekörper (10) aufweist, an den das Gehäuseteil (12) angesetzt ist.

7. Ladesystem (1) nach einem der vorangehenden Ansprüche, **dadurch gekennzeichnet, dass** das Gehäuseteil (12) einen Rand (127) aufweist, der relativ zu dem Gehäusekörper (10) für einen feuchtigkeitsdichten Übergang zwischen dem Gehäuseteil (12) und dem Gehäusekörper (10) abgedichtet ist.

## Claims

1. A charging system, including a charging cable (2) for producing an electrical connection for transmitting charging currents between a charging station and an electric vehicle and a charging connector (1) connected to the charging cable for plug-in connection to a mating plug-in connector part (3) for charging the electric vehicle, wherein the charging connector (1) can be brought into engagement with the mating plug-in part (3) along a direction of insertion (E) and includes:
- a housing part (12), which is produced from a first material,
- at least two plug-in elements (120, 121) arranged on the housing part (12) for electrically contacting the mating plug-in connector part (3), and
- an attachment part (11) attached to the housing part (12), which is detachably connected to the housing part (12) and has two plug-in portions (110, 111) with one opening (112, 113) each, in which at least one plug-in element (120, 121) each is arranged,
**characterized in that** the attachment part (11) is produced from a second material, which is different from the first material,
wherein the attachment part (11) has a planar portion (114) extended transversely to the direction of insertion (E), which lies against an assigned planar portion (122) of the housing part (12) and from which the two plug-in portions (110, 111) project,
wherein the attachment part (11) has at least one form-fitting element (115, 118), which is in form-fitting engagement with an assigned mating form-fitting element (123, 125) of the housing part (12) in such a way that the attachment part (11) is secured so as not to turn in relation to the housing part (12) about the direction of insertion (E) along which the charging connector (1) can be connected to the mating plug-in connector part (3),
wherein the attachment part (11) has an engaging element (116), which is in engagement with a mating element (124) of the housing part (12), wherein the engaging element (116) has an opening (117), through which a fastening element (13) for fastening the attachment part (11) to the housing part (12) reaches.

2. The charging system according to claim 1, **characterized in that** the housing part (12) is produced from plastic, in particular a thermoplastic.

3. The charging system according to claim 1 or 2, **characterized in that** the attachment part (11) is produced from metal.

4. The charging system according to claim 3, **characterized in that** the attachment part (11) is produced from a die-cast metal, in particular a die-cast aluminium.

5. The charging system according to any of the preceding claims, **characterized in that** the at least one form-fitting element (115, 118) of the attachment part (11) is formed by a pin which is in engagement with an assigned mating form-fitting element (123, 125) of the housing part (12) in the form of an opening.

6. The charging system (1) according to any of the preceding claims, **characterized in that** the charging connector (1) has a housing body (10) to which the housing part (12) is attached.

7. The charging system (1) according to any of the preceding claims, **characterized in that** the housing part (12) has a periphery (127), which is sealed in relation to the housing body (10) for a moisture-proof transition between the housing part (12) and the housing body (10).

## Revendications

1. Système de charge, comprenant un câble de charge (2) pour établir une connexion électrique pour la transmission de courants de charge entre une station de charge et un véhicule électrique et une fiche de charge (1) reliée au câble de charge (2) pour la connexion par enfichage avec une partie de connecteur à enfichage homologue (3) pour charger le véhicule électrique, la fiche de charge (1) pouvant être mise en prise avec la partie de connecteur à enfichage homologue (3) le long d'une direction d'enfichage (E) et comprenant :
- une partie de boîtier (12) qui est fabriquée dans un premier matériau,
- au moins deux éléments d'enfichage (120, 121) disposés au niveau de la partie de boîtier (12) et servant à établir un contact électrique avec la partie de connecteur à enfichage homologue (3) et
- une partie d'application (11) appliquée contre la partie de boîtier (12) et reliée de manière amovible à la partie de boîtier (12), laquelle possède deux portions d'enfichage (110, 111) avec chacune une ouverture (112, 113) dans laquelle est disposé respectivement au moins un élément d'enfichage (120, 121),
**caractérisé en ce que** la partie d'application (11) est fabriquée dans un deuxième matériau différent du premier matériau,
la partie d'application (11) possédant une portion plate (114) s'étendant transversalement à la direction d'enfichage (E), qui repose contre une portion de surface (122) associée de la partie de boîtier (12) et de laquelle les deux portions d'enfichage (110, 111) font saillie,
la partie d'application (11) possédant au moins un élément d'assemblage par complémentarité de formes (115, 118) qui est en prise par complémentarité de formes avec un élément d'assemblage par complémentarité de formes homologue (123, 125) de la partie de boîtier (12) de telle sorte que la partie d'application (11) est fixée solidaire en rotation par rapport à la partie de boîtier (12) autour de la direction d'enfichage (E) le long de laquelle la fiche de charge (1) peut être reliée à la partie de connecteur à enfichage homologue (3),
la partie d'application (11) possédant un élément de mise en prise (116) qui est en prise avec un élément homologue (124) de la partie de boîtier (12), l'élément de mise en prise (116) possédant une ouverture (117) à travers laquelle passe un élément de fixation (13) destiné à fixer la partie d'application (11) à la partie de boîtier (12).

2. Système de charge selon la revendication 1, **caractérisé en ce que** la partie de boîtier (12) est fabriquée en matière plastique, notamment en une matière thermoplastique.

3. Système de charge selon la revendication 1 ou 2, **caractérisé en ce que** la partie d'application (11) est fabriquée en métal.

4. Système de charge selon la revendication 3, **caractérisé en ce que** la partie d'application (11) est fabriquée en un métal coulé sous pression, notamment en aluminium coulé sous pression.

5. Système de charge selon l'une quelconque des revendications précédentes, **caractérisé en ce que** l'au moins un élément d'assemblage par complémentarité de formes (115, 118) de la partie d'application (11) est formé par un tenon qui vient en prise avec un élément d'assemblage par complémentarité de formes homologue (123, 125) associé de la partie de boîtier (12) sous la forme d'une ouverture.

6. Système de charge (1) selon l'une quelconque des revendications précédentes, **caractérisé en ce que** la fiche de charge (1) possède un corps de boîtier (10) contre lequel est appliquée la partie de boîtier (12).

7. Système de charge (1) selon l'une quelconque des revendications précédentes, **caractérisé en ce que** la partie de boîtier (12) possède un bord (127) qui est rendu étanche par rapport au corps de boîtier (10) pour une transition étanche à l'humidité entre la partie de boîtier (12) et le corps de boîtier (10).
